# EUROPEAN PATENT APPLICATION

(11) **EP 4 488 980 A1**
(43) Date of publication of application: **08.01.2025**
(21) Application number: 23183469.8
(22) Date of filing: 04.07.2023
(51) Int. Cl.: G08G 5/00, B64F 1/36, E01F 9/559, F21S 2/00, G08G 5/06

(54) **SYSTEM AND METHOD FOR AUTOMATED GROUND TRAFFIC CONTROL ON AN AIRPORT BY SWITCHING IN-PAVEMENT LIGHTS**

(71) Applicant: ADB SAFEGATE Austria GmbH, 8020 Graz (AT)
(72) Inventor: Menè, Luca, N/A Dubai (AE); Woborsky, Christian, 2301 Gross Enzersdorf (AT); Sugimoto, Ieyasu, 8043 Graz (AT)
(74) Representative: AWA Benelux

(57) **Abstract**

A system for automated airport traffic control comprises a traffic control unit connected to a plurality of in-pavement lights arranged along an airport traffic lane, such as a taxiway. Each of the plurality of in-pavement lights is configured to be switchable between alternately emitting a first monocolour light in a first direction and a second monocolour light in the first direction different from the first monocolour light, particularly red. The traffic control unit is configured to receive airport traffic surveillance data, to process the airport traffic surveillance data so as to determine a traffic conflict situation, to generate traffic control instructions to avoid and/or resolve the traffic conflict situation, and to generate switching commands based on the traffic control instructions. The switching commands are configured to switching a first sequence of the plurality of in-pavement lights to emit the second monocolour light in the first direction so as to provide a visual instruction to an aircraft and/or airport vehicle.

## Description

### Technical field

The present invention is related to integrated systems and methods allowing to provide visual instructions to airfield traffic in an automated way.

### Background art

For years pilots have been asking for adequate visual guidance during ground movement operations. Present airfield surveillance and guidance systems are facing limitations because visual aids are installed at physically determined positions and they cannot be simply moved across the airfield where need arises to control airfield traffic. Moreover, the installation of additional visual aids is costly and causes disruption to airport operations. For these reasons, a significant part of traffic guidance instructions are provided by the airport tower control operators as voice commands to the pilots. In critical situations however, pilots and drivers must react fast and the sequence of controller reaction to an alert, voice commands and pilot reaction may take too long.

Advanced surface movement guidance and control systems (A-SMGCS), such as described in EP0883873, support Air Traffic Control (ATC) operators in the control tower to ensure safe and efficient ground operations. Such A-SMGCS systems provide various functionalities on a shared platform based on a service-oriented architecture. The different features are operationally and technically aligned on the same platform, where information can be processed, displayed and modified in a consistent way. Additional functionality can be easily integrated, so that the platform combines all information and tools needed by different stakeholders to manage the traffic of movements at airports in the most safe, efficient, and sustainable way.

Advanced A-SMGCS systems may be provided with a Guidance service to provide visual guidance to aircraft and vehicles by controlling the airfield visual aids (e.g. stop bars, taxiway centreline lights, Intermediate holding position lights, etc.). One popular solution in literature, but very rarely implemented, is to guide aircraft individually in the manoeuvring area via activation/deactivation of green taxiway centreline lights ahead of the aircraft to visually indicate the route to follow (so-called "Follow the Greens" concept). If the aircraft is required to stop, the green lights will extinguish and (if available) red stop bar lights installed across the taxiway will illuminate. The "Follow the Greens" lights can be activated manually by control tower operators upon suggestion of a taxiing route by the A-SMGCS system, or in a fully automated way.

However, in some situations, an aircraft is required to stop at a position that is not provided with stop bar lights and the absence of lit green lights (switched off) is used instead to instruct the aircraft to stop. The absence of "green centreline lights" in front of an aircraft in these cases causes a safety hazard as it is not as much a clear indication of a stop instruction as red lights could be. As an additional limitation, in order to implement "Follow the Greens" operations at an airport, each single fixture within the entire manoeuvring area needs to be provided with aeronautical ground lighting (AGL) technology to be able to be individually activated by an Airfield Lighting Control System (ALCS), which means huge costs for airfields where a full upgrade of the AGL infrastructure and control system is required.

A bidirectional taxiway centreline light including multiple clusters of light sources which can emit light in different colours, such as red, yellow, blue and green, is known from WO 97/44614. Each cluster comprises a plurality of light emitting diodes of different colour.

### Summary

It is therefore an aim of the present disclosure to provide systems and related methods which improve safety and efficiency of ground traffic movements on an airfield. It is an aim of the present disclosure to provide such systems which can reduce installation and/or maintenance costs and are more flexible for use in case of need. Specifically, it is an aim of the present disclosure to provide such a system and related methods providing new airport traffic control applications which improve safety and efficiency of ground traffic movements on the airfield.

According to the present disclosure, there is thus provided a system for automated airport traffic control, as set out in the appended claims.

A system for automated airport (ground) traffic control according to aspects of the present disclosure comprises a traffic control unit connected to a plurality of in-pavement lights arranged along an airport traffic lane, particularly a taxiway, a runway, an apron and/or a manoeuvring area of the airport. Each of the plurality of in-pavement lights is configured to be switchable between emitting a first monocolour light in a first direction and a second monocolour light in the first direction in an alternate manner. Advantageously, the first monocolour light corresponds with a basic application colour of the plurality of in-pavement lights emitting in the first direction, such as selected from the group consisting of green, yellow, orange, blue and white. The second monocolour light is different from the first monocolour light, advantageously red or yellow. The traffic control unit is configured to:
receive airport traffic surveillance data,
process the airport traffic surveillance data so as to determine a traffic conflict situation, generate traffic control instructions to avoid and/or resolve or mitigate the traffic conflict situation, and
generate switching commands based on the traffic control instructions, the switching commands configured to switching a first sequence of multiple of the plurality of in-pavement lights to emit the second monocolour light in the first direction so as to provide a visual instruction to an aircraft and/or airport vehicle.

Advantageously, the visual instructions are configured to carry out the traffic control instructions, such as including a halt instruction, a no entry instruction or a clearance instruction when the traffic conflict situation is resolved. Advantageously, the first sequence of in-pavement lights is configured to emit steadily the second monocolour light.

According to the present disclosure, there is further provided a computer-implemented method for automated airport traffic control.

A computer-implemented method of automated airport (ground) traffic control according to aspects of the present disclosure comprises providing visual instructions through switching a plurality of in-pavement lights arranged along an airport traffic lane, particularly a taxiway, a runway, an apron and/or a manoeuvring area of the airport, wherein each of the plurality of in-pavement lights is switchable between alternately emitting a first monocolour light in a first direction and a second monocolour light in the first direction, preferably wherein the first monocolour light corresponds with a basic application colour of the plurality of in-pavement lights emitting in the first direction, preferably selected from the group consisting of green, yellow, orange, blue and white and wherein the second monocolour light is different from the first monocolour light, preferably red or yellow, the method comprising:
receiving airport traffic surveillance data,
processing the airport traffic surveillance data to determine (e.g., to establish or predict) a traffic conflict situation and generating traffic control instructions to avoid and/or resolve the traffic conflict situation, and
generating switching commands to switching a first sequence of the plurality of in-pavement lights to emit the second monocolour light in the first direction so as to provide a visual instruction to an aircraft and/or airport vehicle based on the traffic control instructions.

Advantageously, the plurality of in-pavement lights are centreline lights, lead-on lights, or lead-off lights. Advantageously, the first sequence of in-pavement lights is configured to emit steadily the second monocolour light.

Advantageously, the method further comprises assigning lights of the plurality of in-pavement lights to the first sequence based on the airport traffic surveillance data and on the traffic control instructions.

Advantageously, the method further comprises determining that the traffic conflict situation is resolved followed by generating switching commands to switching the first sequence of the in-pavement lights to stop emitting the second monocolour light, optionally to start emitting the first monocolour light in the first direction.

Advantageously, the traffic control instructions and/or the visual instructions comprise a halt instruction for the aircraft and/or airport vehicle indicated by the first sequence. In some examples, the airport vehicle is a push back truck and the halt instruction indicates a halt position following an aircraft push back operation by the first sequence.

Advantageously, the traffic control instructions and/or the visual instructions comprise a route indication instruction at a junction of two or more airport traffic lanes. The route indication instruction is visually indicated by the first sequence indicating an airport traffic lane closed to the aircraft and/or airport vehicle at the junction. Advantageously, the route indication instructions further comprises visual indication of a route assigned to the aircraft and/or airport vehicle by a second sequence of the in-pavement lights emitting the first monocolour light, wherein the in-pavement lights of the second sequence are located longitudinally along the assigned route. In some examples, the airport traffic lanes are de-icing lanes. In other examples, the airport traffic lanes are parallel taxi lines on a same taxiway of the airfield.

Advantageously, the traffic control instructions and/or the visual instructions comprise clearance instructions to taxi-out from a park position of an aircraft and/or airport vehicle, the clearance instructions comprising switching the in-pavement lights of the first sequence to stop emitting the second monocolour light, optionally switching the in-pavement lights of the first sequence to start emitting the first monocolour light.

Advantageously, the traffic control instructions and/or the visual instructions comprise segmenting an airport traffic lane provided with the in-pavement lights in multiple consecutive longitudinal blocks, e.g. each block receiving a single aircraft and/or airport vehicle, by separating two consecutive ones of the longitudinal blocks by the first sequence of the in-pavement lights.

In an alternative aspect, the plurality of in-pavement lights are replaced by first in-pavement lights emitting in the first monocolour light in the first direction and second in-pavement lights emitting in the second monocolour light in the first direction. The first in-pavement lights are arranged in a first row along the airport traffic lane, advantageously along a centreline of the airport traffic lane. The second in-pavement lights are arranged in at least one second row parallel to the first row. The second in-pavement lights of the second row can be interleaved with the first in-pavement lights of the first row. Alternatively, the second row is offset from and advantageously parallel to, the first row.

Methods according to the present disclosure can be implemented in the systems for automated airport traffic control according to the present disclosure.

New kinds of visual indications and instructions for pilots and drivers on an airfield are provided, relying on adaptive in-pavement lights changing their basic application colour, green, orange, yellow or blue of taxiway and apron centreline lights, to red, upon operational needs. These adaptive in-pavement lights are advantageously centreline lights allowing the emitted light to be switched between individual selectable colours, in the same direction. The implementation of a guidance and alerting logic supported by airport traffic surveillance data and able to automatically generate switching commands for these adaptive lights creates the possibility to provide visual instructions to ground traffic where and when needed. Advantageously, these adaptive lights can be combined with automated and supportive flight data processing into new and more efficient A-SMGCS routing and guidance services, resulting in very clear and unambiguous visual instructions which can be delivered to pilots at any location while taxiing their aircraft.

In addition, the present disclosure alternatively provides systems and related methods able to provide the above visual indications for pilots and drivers on an airfield relying on second in-pavement lights emitting in a colour different from the green, yellow or blue colour of centreline lights, preferably red.

The systems and related methods according to the present disclosure advantageously provide automated ground traffic control on the entire airfield, or alternatively limited to specific areas (intersections, holding positions, critical safety areas, de-icing, etc.). In the present disclosure, additional guidance logic and operational concepts are introduced, beyond the standard A-SMGCS guidance service, based on the use of adaptive in-pavement lights to enhance the air traffic control capabilities of an A-SMGCS system as well as to increase the safety of the ground operations.

There are several operational situations for which pilots have been asking to improve safety for long time via the use of "stop lights" (similar to traditional road traffic lights), and the solutions presented in the present disclosure enable to overcome these situations by providing lights emitting in a first colour, e.g. green and in a second colour, e.g. red in a time-sequential manner. During low visibility, high traffic density or even at normal visibility, there's no means to stop an aircraft other than radio communication from Tower to pilot (or switching off the lights entirely). Switching ON (automatically) a sequence of red lights longitudinally along the route is a fast method to give a clear indication to the pilot to stop without the need of radio telecommunication.

The present methods and systems advantageously complement "Follow the Greens" operations, further allowing to overcome a significant shortcoming of the current "Follow the Greens" concept, which is the ambiguity of how a pilot must react if the aircraft reaches the end of a green light band, with another green light band possibly continuing after some distance, it being unclear whether the pilot is allowed to continue, or should stop. This might happen at intersections, where the disruption of a green light band is intentional because of intersecting traffic that has precedence and the pilot must stop, or simply by faulty lights and the pilot could actually continue. Furthermore, the clear visual indication of an intersection through utilising the red light indication allows pilots to have situational awareness and accurately control the aircraft speed and reduce stops and/or braking actions.

The solutions provided in the present disclosure allow to introduce further safe guidance concepts that exist in parallel or as an alternative to "Follow the Greens" operations and can be implemented without or with minimal changes to existing ATC operations/procedures. In addition, the situational awareness of pilots (and pushback or other vehicle drivers) is vastly improved, leading to safer and more efficient taxi operations without the need of any additional training or publication by simply using intuitive ways of guidance. A further advantage of solutions of the present disclosure is that the principle that a red light means stop is generally accepted by international aviation organisations as well as applied on railway and vehicle route traffic.

Complex (historic) taxiway layouts often lead to confusion among pilots, especially if they are not familiar with the taxiway layout and taxi procedures at an airport. The solutions according to the present disclosure allow to secure hotspot locations and protect taxiways that cannot be used in certain runway configurations or weather conditions in an easy way.

The various aspects of the present disclosure easily allow for being integrated into automated surface movement guidance and control systems, enabling to smoothen ground traffic on an airfield and/or increase throughput. Furthermore, the aspects allow smoother guidance of airfield traffic, with fewer stops and more uniform speed saving fuel and reducing CO₂ emissions.

### Brief description of the drawings

Aspects of the invention will now be described in more detail with reference to the appended drawings, wherein same reference numerals illustrate same features and wherein:
Figure 1 represents a ground map of a movement area of an airport;
Figure 2 represents a diagram of a stop bar system at a runway entrance (runway holding position) or at a junction between an airfield service road and a taxiway or runway;
Figure 3 represents a diagram of an advanced surface movement guidance and control system (A-SMGCS);
Figure 4A represents a diagram of a taxiway junction with in-pavement light arrangements according to the present disclosure; Figure 4B represents a diagram of an adaptive in-pavement light emitting in a first colour; Figure 4C represents a diagram of the adaptive in-pavement light of Fig. 4B emitting in a second colour;
Figure 5 represents a diagram of a junction between two airfield lanes, e.g., two taxi lanes, indicating holding positions according to the present disclosure;
Figure 6 represents a diagram of the junction of Fig. 5, when the holding positions are cleared by turning off the second lights and lighting further centreline lights along the route;
Figure 7A represents a diagram of traffic management for aircrafts at an intersection according to the present disclosure. Figure 7B represents the diagram of Fig. 7A at a further time instant at which one aircraft crosses the intersection. Figure 7C represents the diagram of Fig. 7A at a yet further time instant when the second aircraft receives clearance instructions according to the present disclosure;
Figure 8 represents a diagram of holding positions for aircrafts awaiting to receive clearance for taxi according to the present disclosure;
Figure 9 represents a diagram of a line-up of aircrafts on a taxiway;
Figure 10 represents a line of lights that can be activated in blocks of multiple lights, where black circles represent lit lights and white circles represent lights that are unlit;
Figure 11 represents a diagram of a junction of multiple traffic lanes with closed lanes indicated by a sequence of red emitting lights parallel to the centreline at the entrance of the closed lane;
Figure 12 represents a diagram of a hotspot junction between a runway and a taxiway, in which the runway, the taxiway and the connecting ramps are illustrated by the respective centrelines;
Figure 13 represents a diagram of a runway stop bar overrun by an aircraft and illumination of a longitudinal row of second red lights as a visual warning indication according to the present disclosure;
Figure 14 represents a diagram of a complex traffic scenario on an airfield, solved according to the present disclosure;
Figure 15 represents a diagram of a taxiway junction with in-pavement light arrangements according to an alternative aspect of the present disclosure;
Figure 16 represents a diagram of a system to operate AGL circuits including adaptive lights according to the present disclosure.

### Detailed description

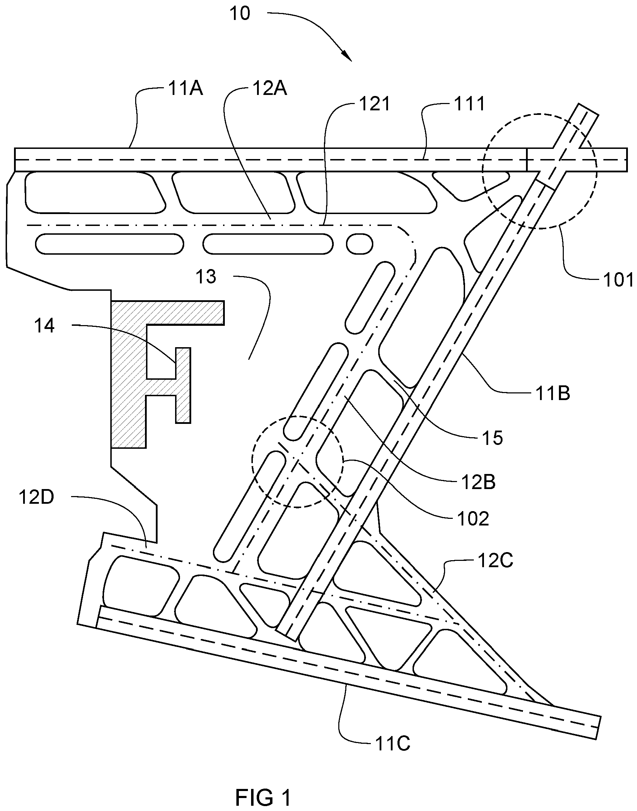

Referring to Fig. 1, a typical layout of an airport 10 comprises one or more runways 11A-11C, one or more taxiways 12A-12D, an Apron 13 and an airport terminal 14. The airport 10 can further comprise one or more service roads (not shown) parallel to one or more of the runways 11A-11C and/or to one or more of the taxiways 12A-12D. The runways 11A-11C are connected to the taxiways 12A-12D through multiple entrance/exit ramps 15. Flush-mounted aeronautical ground lights mark the centrelines 111 of the runways 11A-11C and the centrelines 121 of the taxiways 12A-12D. Due to the physical layout of the airfield, various crossings between runways, taxiways, service roads and entrance/exit ramps may cause confusion and therefore hazardous traffic situations, referred to as hot spots. Possible airfield hot spots are a confusing runway entrance at a junction 101 between two runways 11A, 11B, or a crossing 102 between two taxiways 12B - 12C.

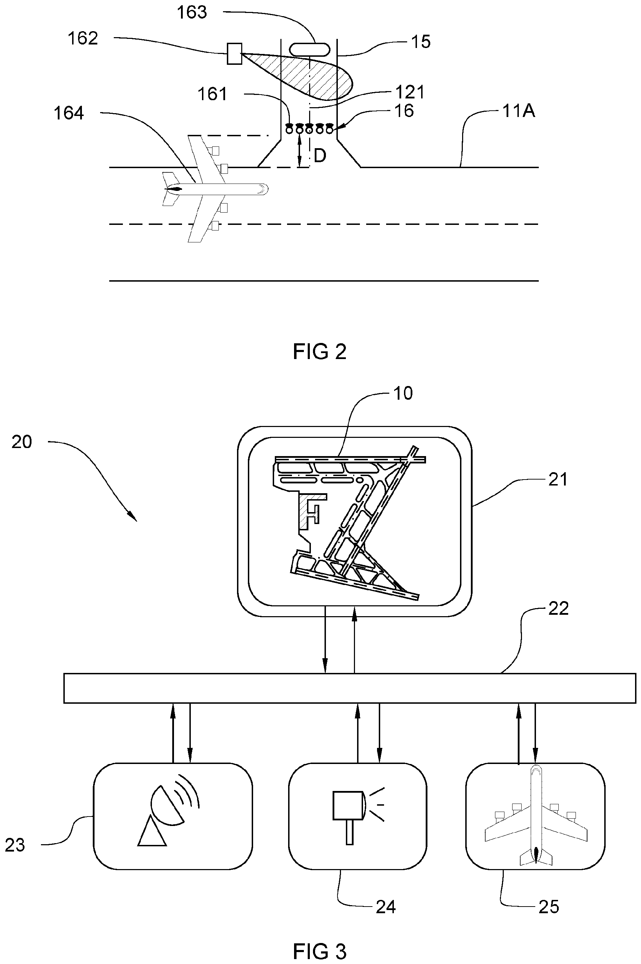

To cope with these situations, and provide clear and unambiguous visual instructions to the pilots and other airfield users, so-called stop bars have been developed as set out in ICAO (International Civil Aviation Organisation) Annex 14. Referring to Fig. 2, a stop bar 16 typically comprises a plurality of unidirectional red lights 161 embedded in the pavement at the respective holding point. The lights 161 are typically arranged in one row transverse to a traffic lane (taxiway, entrance/exit ramp, service road, etc.), particularly at right angles to the centreline 121. When the stop bar lights 161 are lit, an unambiguous instruction is provided to the pilot to halt the aircraft at the stop bar position. Typically, stop bars are installed in association with green (or alternate green and yellow) lead-on lights which are a continuation of the taxiway centreline lighting beyond the stop bar. Lead-on lights guide an aircraft onto the runway centreline. Where provided, the lead-on lights are operated in conjunction with the associated stop bar so that when the stop bar lights are lit (red stop bar), the lead-on lights are unlit for a specified distance (e.g., 90 m) beyond the stop bar and vice versa.

The stop bar can be operably connected with one or more vehicle/aircraft detection devices or surveillance systems, such as microwave or radar detectors 162 next to the traffic lane and/or magnetic detectors 163 which may be embedded in the pavement. These detection devices or surveillance systems may be arranged to detect an aircraft or vehicle in front of the stop bar lights 161 and/or behind the lights 161 to detect whether any unauthorized passing occurred. The stop bar lights 161 are generally positioned at a safe distance D remote from the accessible traffic lane (e.g., the runway 11A) to take the wing span of an off-centre aircraft 164 into account.

Referring to Fig. 3, an A-SMGCS 20 comprises a synthetic display 21, located in a control tower room on which all relevant ground traffic elements of the airport 10 are displayed, advantageously through a combination of graphic symbols and text matter. To this end, the A-SMGCS 20 collects data from airfield sensors 23, such as primary and secondary surveillance systems (radar, multilateration system, field sensors, etc.), to obtain information on one or more of position, speed and identification of aircraft and possibly other airport vehicles. The A-SMGCS 20 is further operably connected to various airfield lighting systems 24, including aeronautical ground lighting (AGL), to remotely control operation thereof (guidance service). A flight planning and sequencing system 25 is connected to and possibly integrated in the A-SMGCS 20. Yet further airport control or detection systems may be operably connected to the A-SMGCS 20, such as weather condition prediction, temperature and/or environmental detection systems, etc. All these systems 23-25 are advantageously connected to the A-SMGCS 20 through a wired and/or wireless data communication network 22.

In particular, the A-SMGCS 20 is advantageously configured to remotely operate at least some of the AGL systems present on the airfield, particularly stopbars, the centreline lights on the taxiways, aprons and runways and possibly any other lights embedded in the pavement of the airfield. Operation of some AGL systems can be effected manually by a control tower operator, through the synthetic display 21. Advantageously, the A-SMGCS 20 is configured to operate at least some of the AGL systems automatically, based on an automated airfield traffic management. According to aspects of the present disclosure, some of these AGL systems can operate fully automatic within a (local) traffic control logic, in particular within a conflict prediction and/or detection and warning system.

Despite the existing warning systems, there are several operational situations occurring at various locations across the airfield where a visual stop or hold instruction, similar to traditional road traffic lights, would improve safety, in particular for sequencing traffic. One disadvantage of stop bar systems is that they indicate a fixed, static holding position and cannot be used in traffic situations requiring dynamic stop or halt positions for airfield traffic. Installing stop bar systems all over the airfield is furthermore costly and could also reduce efficiency of the airport operations. In the present disclosure, solutions are provided, allowing to mark holding positions and/or provide guidance and even to emit visual alerts at virtually any location across the airfield with reduced installation expense.

In examples of the present disclosure, airfield lights embedded in the pavement, particularly aeronautical ground lights, which can be unidirectional or bidirectional lights, are utilized, which are configured to emit at least two colours alternately in a same direction. Particularly, these in-pavement airfield lights, referred to herein as adaptive lights, are configured to emit, in a first direction, alternately a first light beam of a single colour (first monocolour light) and a second light beam of a single colour (second monocolour light) different from the colour of the first light beam, and possibly a third light beam of a single colour different from the colour of the first and second light beams. As a result, the in-pavement airfield lights are configured to be switched, through appropriate control signals, between emitting the first light beam, emitting the second light beam, possibly emitting the third light beam, and being off (unlit), in a mutually exclusive fashion. These lights are configured to emit one colour at a time in the first direction, e.g., when lit in the second monocolour light, the associated first monocolour light is off and vice versa. The emitted light intensity for any one of the first, second and possibly third monocolour lights can be fixed or variable and can be steady or intermittent (blinking or flashing). All these first, second and possibly third lights are emitted in a same direction, either unidirectionally, bidirectionally or multidirectionally. When bidirectional (or multidirectional) lights are utilized, the adaptability of the light to emit the first, second and possibly third monocolour light can be provided in one direction only, or in multiple directions, e.g. in both directions for bidirectional lights.

The first monocolour light is advantageously a purpose colour for the respective in-pavement airfield light in accordance with ICAO Annex 14. The second monocolour light can be red or yellow. If the second monocolour light is red, the third monocolour light can be yellow. These in-pavement lights are advantageously arranged along a centreline of the respective traffic lane (taxiway, service road, etc.) and/or along an extension of the centreline. They are advantageously centreline lights and/or (taxiway) lead-on (or lead-off) lights. At least some of the adaptive in-pavement lights can be taxiway centreline lights and the first monocolour light is green, blue or yellow. As indicated above, in an aspect of the present disclosure, the adaptive in-pavement lights are configured to be operated to switch from a first state emitting the first monocolour light to a second state emitting the second monocolour light and vice versa. Switching from the first state to the second state may involve passing through one or more unlit states and/or passing through a third state emitting the third monocolour light. Advantageously, the first state and the second state are exclusive and cannot be activated at the same time. Suitable examples of colour combinations for any one or all light beams of an adaptive centreline lights are listed in Table 1. Centreline lights of the above kind are known from WO 97/44614, which is incorporated herein by reference.

**Table 1: Exemplary colour combinations for adaptive centreline lights according to the present disclosure; example for bidirectional light**

| First light beam direction | | Second light beam direction | |
|---|---|---|---|
| First colour | Second colour | First colour | Second colour |
| Green | Red | Green | Red |
| Yellow | Red | Green | Red |
| Green | Red | Yellow | Red |
| Yellow | Red | Yellow | Red |
| Blue | Red | Blue | Red |
| Green | Yellow | Green | Yellow |

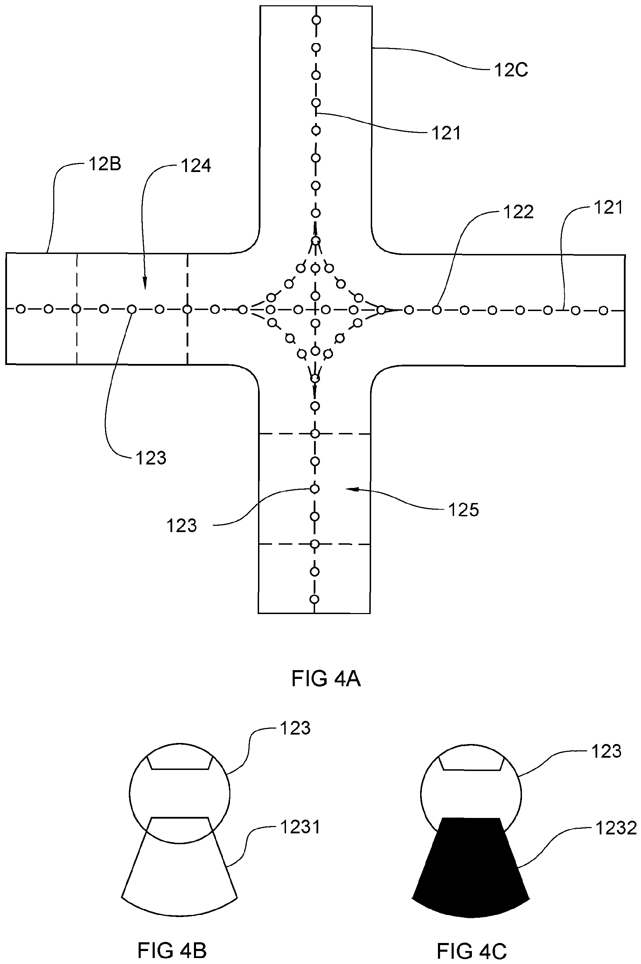

Referring to Figs. 4A-4C, an intersection of various traffic lanes on an airfield, comprise centreline lights 122 arranged on or along the centreline 121 of the respective traffic lane (e.g., taxiway 12B, 12C). The centreline lights 122 are embedded in the pavement (so-called inset, flush-mounted or in-pavement lights) and can be unidirectional or bidirectional lights. They typically emit green light on a taxiway centreline (possibly alternate green and yellow in sensitive areas or as taxiway lead-on or lead-off lights). In examples of the present disclosure, in at least some segments 124, 125 of the respective traffic lane, adaptive centreline lights 123 are installed in which the light can be switched to turn from emitting a beam of the first monocolour light 1231 (e.g., green - Fig. 4B) to emitting a beam of the second monocolour light 1232 (e.g., red - Fig. 4C) and vice versa. Segments 124, 125 are particularly located in proximity of an intersection where it is desired to create a halt or holding position when needed. As will be described in more detail below, the adaptive centreline lights 123 advantageously allow to provide unambiguous visual indication of a halt (STOP) or holding position, or of a restricted area, or an area closed for traffic at virtually any location on the airfield.

In any of the examples according to the present disclosure, any one of the adaptive centreline lights 123, when activated, may be configured to emit steadily in any one of the first, second or even third colour, or intermittently, e.g. as blinking or flashing lights. Any combinations are possible as well. In some examples, the adaptive centreline lights 123, when activated, are configured to emit steadily in the first colour and/or to emit steadily in the second colour, while they may be configured to emit intermittently in the third colour. In some examples, the adaptive lights 123 are configured to turn from the emitting the first monocolour light (e.g., green) steadily to possibly emitting the third monocolour light (e.g., yellow) intermittently, to emitting the second monocolour light (e.g., red) steadily or intermittently.

In the following, for purposes of illustration, it will be assumed that the adaptive centreline lights 123 emit in green colour as the first colour and in red colour as the second colour. It will however be appreciated that other colour combinations are possible, as described above.

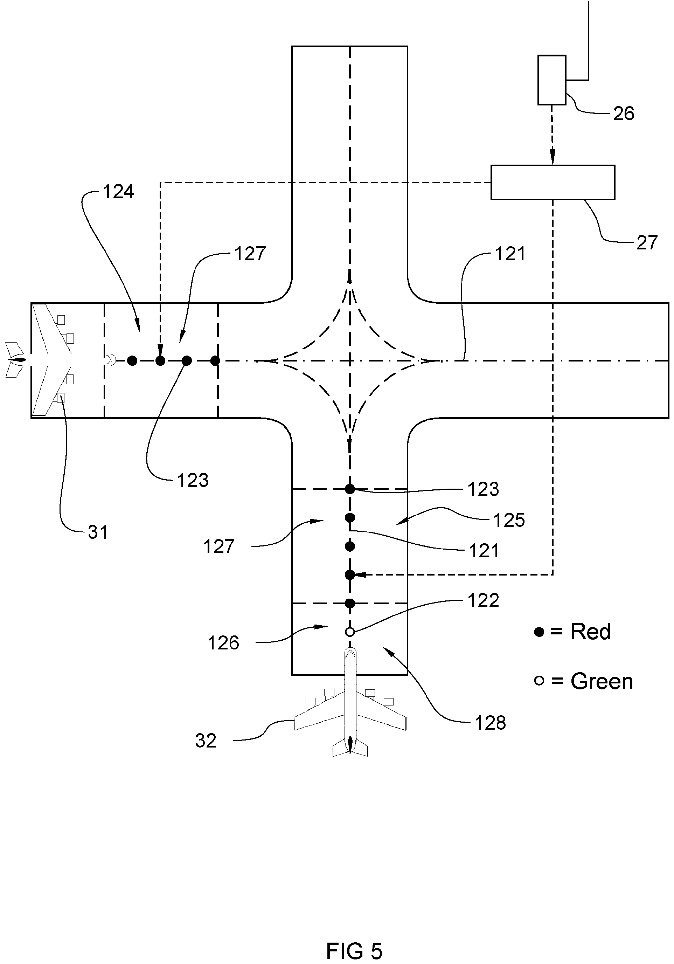

In a first aspect of the present disclosure, referring to Fig. 5, a halt or holding position is indicated by a sequence 127 of adaptive centreline lights 123 emitting red, e.g. in the predefined segments 124, 125. Possibly, the sequence 127 is spatially preceded by a sequence 126 of centreline lights 122 (or of adaptive centreline lights 123) emitting green. The sequence 126 of centreline lights 123 emitting green and/or the sequence 127 of second lights 123 emitting red can be formed of any suitable number of lights, e.g. two, three or even more and the number of lights of each of the sequences 126 and 127 can be identical or different. In Fig. 5, two such halting position configurations are illustrated. Furthermore, in Fig. 5, only the lights 122, 123 that are lit are drawn for reasons of clarity. Hence, advantageously, the sequence 127 of red lights is spatially followed by a sequence of unlit centreline lights (not drawn on the figure). By installing a sequence of the adaptive centreline lights at each designated holding position on the airfield, dynamical holding positions can be created as needed across the airfield thereby increasing situational awareness, avoiding misunderstandings and reducing the need of voice communications. By way of example, aircraft 31, 32 approaching the respective segments 124, 125 receive clear, unambiguous command to stop the aircraft in the respective segment.

The activation of such dynamical holding positions is advantageously performed automatically by a traffic control unit 27, which traffic control unit may or may not be integrated into the A-SMGCS 20. Traffic control unit 27 is configured to activate the adaptive lights 123 automatically based on the traffic situation on the airfield. To this end, traffic control unit 27 advantageously receives ground traffic data from various sensors 26, such as surveillance systems (radar, multilateration system, etc.) and any other suitable traffic detectors. The ground traffic data can comprise or consist of non-cooperative data, and can advantageously further comprise cooperative ground traffic data, particularly data obtained by interrogating the aircraft or airport vehicle. By so doing, further information on the aircraft can be obtained, such as one or more of aircraft size, wingspan, undercarriage layout, speed, oversteering, understeering, countersteering, etc.. Traffic control unit 27 is configured to process the ground traffic data to determine or predict whether any ground traffic conflict situations occur or are about to occur. To this end, the traffic control unit 27 can be implemented with a set of procedures, which may be site-specific, that define a conflict situation, or that enable to determine a conflict situation. The set of procedures can comprise evaluating data including one or a combination of: time, distance, speed, direction, route, vehicle/aircraft type and size. In addition, including cooperative ground traffic data in the traffic conflict check can improve the accuracy of determining or predicting conflict situations.

Based on the ground traffic conflict situations found, traffic control unit 27 is configured to generate traffic control instructions for the various aircrafts and vehicles detected on the airfield with the purpose to avoid and/or mitigate the traffic conflict situations. To this end, the traffic control unit 27 is implemented with a set of rules for generating the traffic control instructions based on the traffic conflict situation. In some examples, the traffic conflict situations are categorized in different types (e.g. based on site-specific occurrence, risk assessment level, etc.), and the set of rules enable to determine traffic control instructions for each type of conflict.

The traffic control unit 27 is further configured to translate the traffic control instructions into switching commands for the adaptive lights 123, and possibly of the centreline lights 122, to generate the sequences 126, 127 at the applicable positions on the airfield. To this end, traffic control unit 27 is implemented with a set of rules to determine which adaptive and/or centreline lights must be switched. The latter set of rules advantageously determines the lights to be switched based on one or a combination of the following parameters: a wingspan of the aircraft, an undercarriage layout of the aircraft, an assigned trajectory of the aircraft and/or airport vehicle, a clearance limit, a layout of the airport, a layout of a respective traffic lane, a position of the aircraft and/or airport vehicle, a speed of the aircraft and/or airport vehicle, a direction of movement of the aircraft and/or airport vehicle, an oversteering, understeering and/or countersteering of the aircraft, an angle of direction change ahead, an environmental condition, or any site-specific set of rules.

Advantageously, the traffic control unit 27 may be coupled to a flight planning and sequencing system, e.g. system 25 of A-SGMCS 20, to receive flight planning and sequencing data. Traffic control unit 27 is advantageously configured to process the flight planning and sequencing data when determining traffic conflict situations and/or generating traffic control instructions. This can further improve conflict checking and/or resolution.

Advantageously, the traffic control unit 27 is further configured to determine that the traffic conflict situation is resolved, and based on determining the traffic conflict situation to be resolved, to reset the previously generated switching commands, or to generate further switching commands for the adaptive lights and possible centreline lights implementing further traffic control instructions coping with the evolved situation. This can be based on the same set of rules as above, or different ones.

It will be appreciated that traffic control unit 27 allows to control the activation of the centreline lights 122 and/or the adaptive lights 123 as contemplated in the present disclosure in an automated way at predetermined areas, e.g. hot spots, of the airfield, or over the entire airfield. The traffic control unit 27 can be operably linked to the A-SMGCS 20, and can be at least partially integrated into the A-SGMCS 20. In addition, the activation of the dynamical holding positions may be performed manually by ATC operators under certain circumstances.

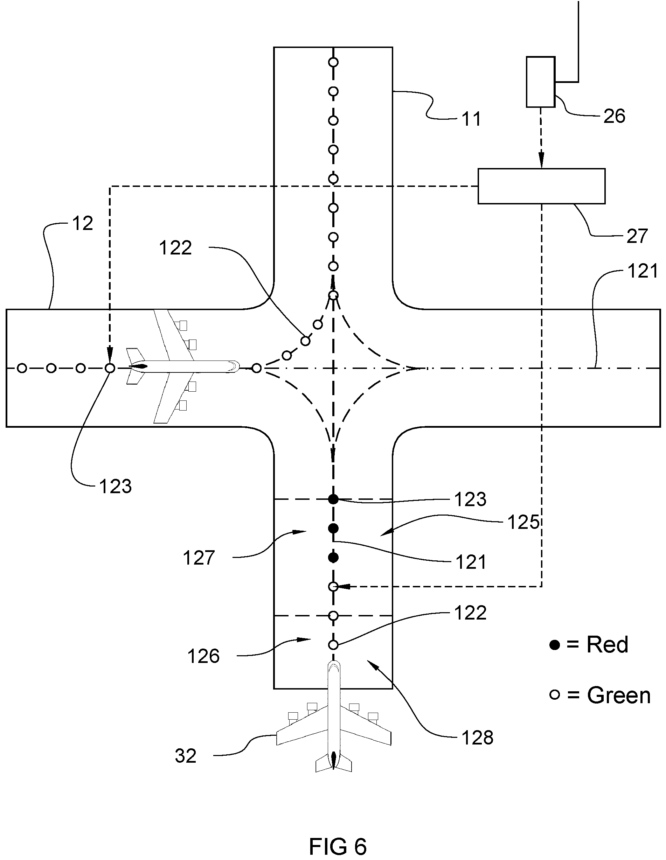

Continuing on the example of Fig. 5, and referring now to Fig. 6, a visual clearance instruction to continue from the holding position can be given to the pilot (e.g., of aircraft 31) or vehicle driver by switching the adaptive lights 123 to turn green and possibly switching on further centreline lights 122/123 along the instructed route, thereby advantageously extending the sequence 126. Also in Fig. 6 only the lights 122 that are lit are shown for clarity reasons.

A first possible example for holding positions of the above kind is general traffic control on the taxiway, e.g. in cases where stop bars are not available, or as an alternative to stop bars. At most airports the costs associated with the installation and operation of stop bars prevents the consistent use of stop bars at all intersections. In addition, at those airports which use a large number of stop bars on the taxiways, pilots prefer to limit the use of stop bars to the runway holding positions and use alternative visual aids on the taxiways. The visual holding position indication according to the present disclosure would therefore be suitable in such cases.

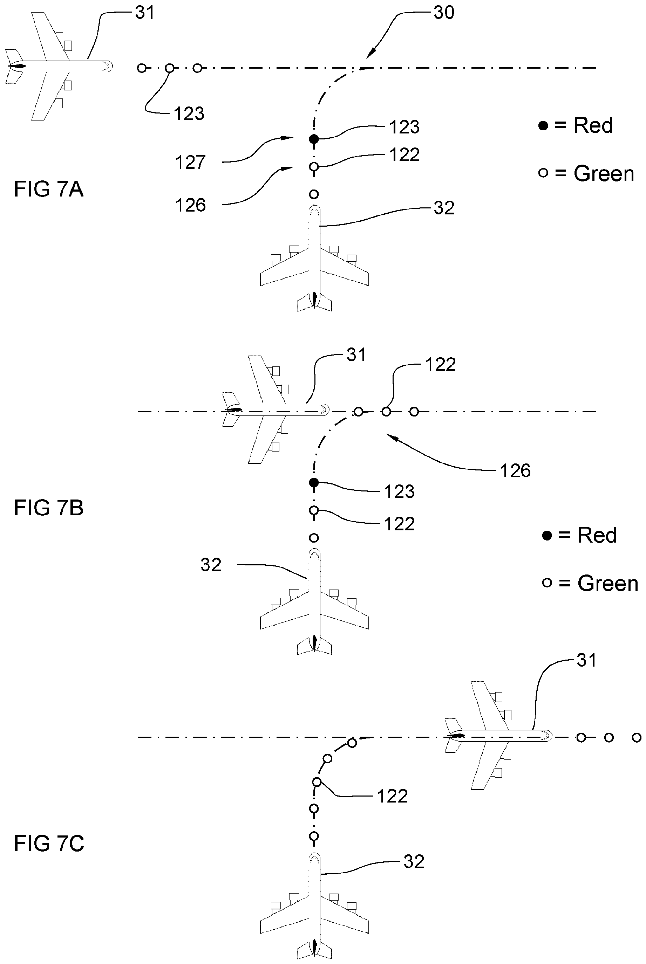

A second possible example is sequencing traffic in the manoeuvring area, particularly where no voice guidance service is provided, e.g. intersection management. Referring to the sequence of illustrations Figs. 7A-7C, when multiple aircrafts 31, 32 approach an intersection 30, the traffic control unit logic can be configured to activate holding position indications according to the present disclosure to provide a clear visual instruction to pilots who is cleared to go at an intersection and who must stop. In combination with a sequence of lit centreline lights, an upfront instruction can be provided how far a pilot is cleared to go. In Fig. 7A, clearance instructions are provided to aircraft 31 by a sequence of lit green adaptive centreline lights 123. Meanwhile, hold instructions are provided to aircraft 32 by a sequence 127 of adaptive centreline lights 123 emitting red. Optionally, the sequence 127 can be spatially preceded by centreline lights 122 (or adaptive centreline lights 123) emitting green. In Fig. 7B, the traffic control unit logic can be configured to provide move forward instructions to aircraft 31 by switching centreline lights 122/123 to emit green along the route. This can be effected either by lighting the centreline lights all along the route (e.g., as illustrated in Fig. 6), or by successively turning on consecutive blocks of centreline lights such that a moving sequence 126 of centreline lights 122 appears along the route, e.g. by lighting centreline lights 122 upfront the aircraft and turning off centreline lights at the rear of the aircraft. In Fig. 7C, once aircraft 31 has passed the intersection 30 (thus conflict situation has been resolved), the traffic control unit logic can be configured to provide clearance instructions to aircraft 32 by switching the adaptive centreline lights 123 to turn from red to green and possibly extending the sequence of green centreline lights upfront, e.g. in the same manner as provided to aircraft 31 in Fig. 7B.

One further specific example is block guidance. When there are multiple intersections, solutions according to the present disclosure can be provided to control traffic at virtually every intersection, and thereby controlling traffic in each segment bounded by consecutive intersections, e.g. aircraft are stopped at intersections until the next segment is free to enter. This obviates the need to install costly stop bars when there is a large number of intersections or junctions.

It will be appreciated that the number of adaptive centreline lights 123 in a sequence 127 as illustrated in the drawings is illustrative only, and the number of adaptive lights in a sequence that should be lit to provide holding position indication can vary depending on circumstances or standards. In practice a sequence of at least three adaptive lights to turn red is advantageous to provide sufficient clear visual stop instruction and/or to provide redundancy in case of light or circuit failure (centreline lights are typically powered through separate circuits in interleaved fashion).

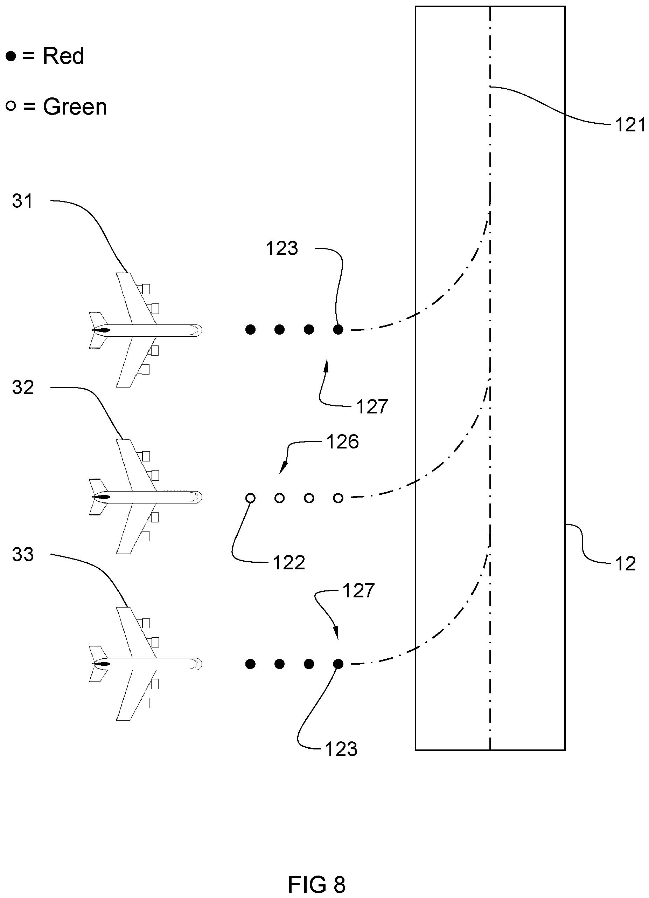

A third possible example is related to pushback operations. The holding position indication as above can be implemented in the traffic control unit logic as a visual instruction for a pushback truck driver on how far to push the aircraft. In addition, or alternatively, the holding position indication can be used for pilots to know whether they are cleared for taxi upon completion of pushback operation. Such taxi clearance indication can be provided at any other convenient location on the airfield (apron, manoeuvring area, taxiway). Referring to Fig. 8, three aircrafts 31, 32, 33 are waiting for taxi clearance, indicated by a sequence of lit adaptive centreline lights 123, optionally preceded by a sequence of green centreline lights 122/123. The traffic control unit logic can be configured to provide Aircraft 32 with taxi-out clearance by switching the sequence 127 of adaptive lights 123 to turn from red to green and possibly lighting further centreline lights green along the route to give a visual instruction of clearance to go.

A fourth possible example is visual routing and guidance service via use of adaptive lights. The visual holding position indication according to the present disclosure can be used to automatically instruct that the pilot has to stop due to a deviation from the cleared route. In addition, or alternatively, the visual holding position indication according to the present disclosure can be used as an indication to the pilot how far he can go along the route, and there is no ambiguity compared to when there is no indication, particularly during "Follow the Greens" operations, solving the ambiguity for the case that there is a gap between green centreline lights to be followed.

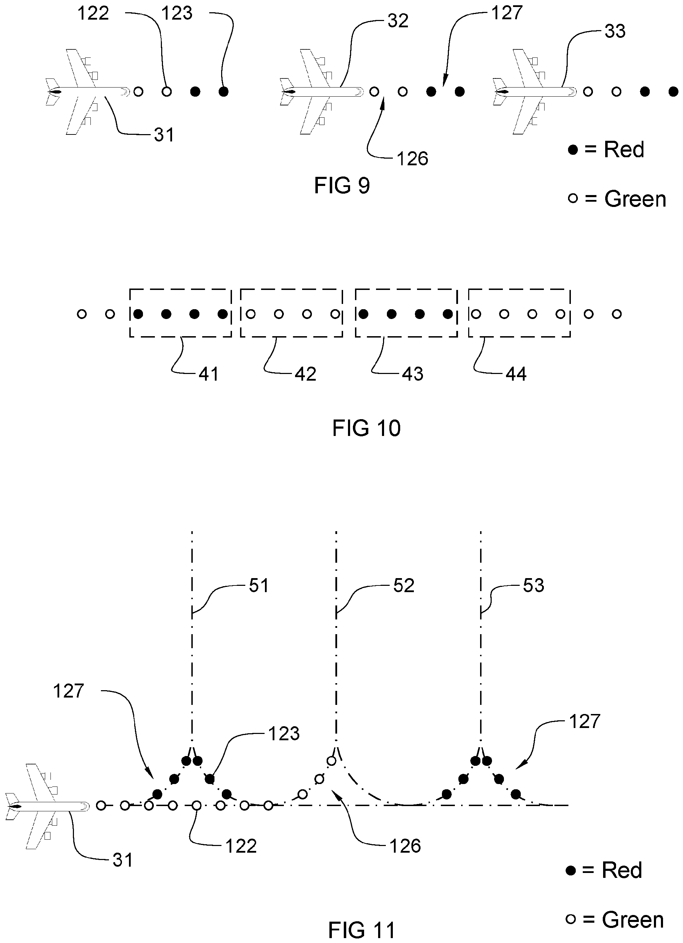

A fifth possible example is related to line-up control for aircrafts. Referring to Fig. 9, when multiple aircrafts 31-33 line up along a route or at holding bays, the visual holding position indications by the sequence 127 of lit red adaptive centreline lights 123, optionally preceded by the sequence 126 of lit green centreline lights 122/123 provide clear visual instructions of the distance that consecutive aircrafts must hold between one another. The traffic control unit logic can be configured to allow both sequences 126, 127 of lit lights to be shifted or to hop along the route. By so doing, it becomes even possible to provide a visual indication to adapt the speed of the respective aircraft to minimise stop and go for efficient fuel consumption and CO₂ reduction. Such a shifting or hopping sequence can be generated in various ways. In a first example, each adaptive centreline light 123 can be switched on and off individually to obtain moving sequences 126, 127 by switching on one light ahead of the sequence and switching off the last light of the sequence in direction of movement. In a second example, referring to Fig. 10, the centreline lights 122 and/or adaptive lights 123 can be activated in blocks 41-44 of a predetermined or variable number of lights. A shifting sequence is obtained by switching on the lights in one block, e.g. block 43, and switching off the lights in a preceding block, e.g. block 42, to obtain a stepwise moving sequence of lights along the route. This can be applied to green lights only, to red lights only, or both to green lights and red lights.

In a second aspect of the present disclosure, the traffic control unit logic can be configured to control the adaptive lights 123 to indicate the assigned route closing other possible intersections. Referring to Fig. 11, traffic lanes (e.g. taxi lanes) 51 and 53 are temporarily closed, because traffic lane 52 is the one assigned to aircraft 31. The route assigned to aircraft 31 can then be visually indicated closing the other potential lanes 51, 53 by a sequence 127 of the adaptive lights 123 emitting red at the entrance of the respective traffic lane. This can be implemented in combination with a sequence 126 of centreline lights 122/123 emitting green to visually indicate the route to follow for an aircraft 31. Some airports, given their specific environment conditions, may have dedicated taxi patterns being activated when entering in low visibility operations. During such conditions aircraft and vehicle movements are strictly separated, and some service roads will be closed. The solution presented in the second aspect of the present disclosure can conveniently be utilized in these conditions, enabling to avoid crossing routes or active runways, and to visually indicate which turns are prohibited.

In first possible examples of the second aspect, the traffic control unit logic can be configured to activate the sequence 127 to visually indicate that traffic lanes 51, 53 are temporarily closed, e.g. areas closed for construction, maintenance work, snow removal, or due to bad weather or low visibility conditions. In some examples, traffic lanes 51, 52 and 53 represent parallel taxi lanes on a same taxiway, with taxi lane 52 being the central taxi lane and Alternative Parallel Taxi Routing (APTR) applied to the taxi lanes 51-53. Some restrictions can be enforced in low visibility conditions (sometimes depending on aircraft type/wingspan category), in which only the central taxi lane 52 is available for taxiing. This can be visually indicated as represented in Fig. 11 by marking the closed taxi lanes 51 and 53 with a sequence 127 of the adaptive lights 123 emitting red at the entrance of the respective lanes, possibly by marking the open taxi lane by a sequence 126 of (adaptive) centreline lights 122/123 emitting green at the entrance of taxi lane 52. Such a solution advantageously prevents that aircraft take wrong turns at intersections or junctions leading into taxiways with APTR. In other examples, traffic lanes 51, 52, 53 represent de-icing lanes. Closed or occupied de-icing lanes can be visually indicated by the sequence 127 of adaptive lights 123 emitting red, possibly in combination with the sequence 126 of green lights providing a visual indication of the de-icing lane that is assigned to an approaching aircraft 31. This supports flexible and efficient utilization of available de-icing resources.

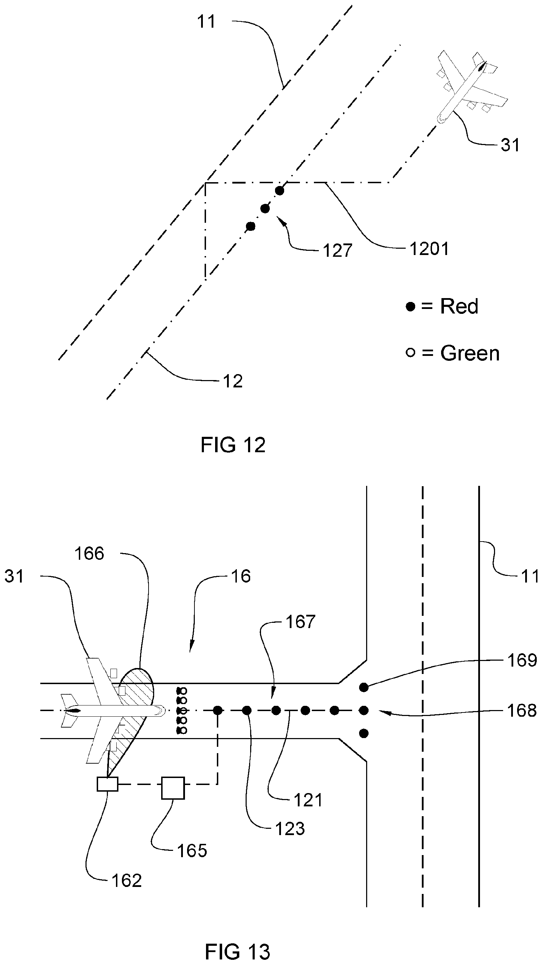

In a second possible example, the traffic control unit logic can be configured to utilize the sequence 127 as a hotspot protection, particularly where taxiways are arranged parallel to active runways, or aircrafts having to cross active runways to move between their parking position and their take-off or landing runway. Referring to Fig. 12, a common situation at many airports are taxiways 12 parallel to a runway 11 and located at the same side of the runway 11 with respect to their parking position (runway and taxiway are illustrated by their centrelines in the figure). Pilots of aircrafts 31 approaching from the right side being cleared to take off from the runway 11 might mistake the taxiway 12 for the runway 11. According to the present disclosure, such a situation is easily avoided when the traffic control unit logic is configured to activate a sequence 127 of lit red adaptive lights 123 at the entrance of taxiway 12 at the junction with access ramp 1201. This avoids the need to install a stop bar.

In a third possible example, the traffic control unit logic is configured to activate the sequence 127 as a safety function in emergency situations to automatically initiate and close/protect routes for aircraft or vehicles by indicating closed lanes with aircrafts being prohibited to enter or exit the respective lane indicated by the sequence 127. Advantageously, way is given to prioritized vehicles by utilizing the sequence 126 on the route for movement. In yet a further example, adaptive lights are installed at taxiways that are used as back-up runways. The traffic control unit logic can be configured to activate these adaptive lights to create holding positions at intersections and junctions when used as back-up runways.

In a third aspect of the present disclosure, the traffic control unit logic is configured to utilize the adaptive lights 123 as a safety support service, particularly for providing a visual warning when a stop instruction / holding position is violated. This solution can be utilized for cases in which an aircraft or vehicle has crossed an illuminated runway stop bar and entered an active runway without authorization, particularly in cases in which the pilot/driver has no further visual indication that he has infringed the stop bar, and may have commenced the take-off roll without authorization. The traffic control unit logic is configured to provide a sequence of adaptive centreline lights emitting red - either steadily or intermittently - as a very effective means to provide a visual warning to pilots and drivers to stop immediately - valuable seconds before the controller instructs the pilot or driver via radiotelephony to stop.

In a first possible example, referring to Fig. 13, an overrun of a lit stop bar 16, or any other stop indication, is detected by the traffic control unit 165, which receives aircraft positional information from e.g. surveillance system, or a microwave or radar detector 162. In some examples, detector 162 is configured to detect speed of an aircraft 31 or vehicle, e.g. when the aircraft 31 passes the detection lobe 166 of detector 162. Detector 162 is coupled to a possibly local traffic control unit 165 which is configured to predict whether the detected speed at the detection position ahead of the stop bar 16 allows to stop the aircraft 31 or vehicle at the lit stop bar or not. Such a prediction may simply be based on comparison of the detected speed of the aircraft with a threshold, or based on some more complex computations, e.g. taking braking distance, runway condition, weather condition and aircraft type into account. In addition or alternatively, aircraft routing schedule, e.g. as provided by an A-SMGCS system, can be taken into account to predict possible overrun of the lit stop bar. Traffic control unit 165 (which may alternatively be integrated in an A-SMGCS system) can be operably coupled to a row 167 of adaptive lights 123 arranged along the centreline 121 to control activation of the adaptive lights 123. If traffic control unit 165 predicts an overrun of the lit stop bar, the traffic control unit activates the adaptive lights 123 to provide a sequence of adaptive lights 123 emitting red. The adaptive lights can be configured to emit steadily, or intermittently (flashing or blinking). Optionally, adjacent adaptive lights 123 are alternately illuminated to emit red and alternate adaptive lights in the row are illuminated in unison. The above measures provide an effective (preventive) visual warning to the pilot or driver of an imminent violation of a stop instruction. In other examples, detector 162 is configured to detect presence and/or position of the aircraft, particularly detector 162 is configured to detect trespassing (overrun) of the lit stop bar 16, or any other stop location, by an aircraft 31 or a vehicle. Detector 162 can communicate a detected trespassing to the traffic control unit 165, which in turn can activate the adaptive lights as described in the previous examples to provide a visual indication of the trespassing to the pilot or driver. Possibly, detector 162 is configured to detect both speed and position. It will be appreciated that the row 167 of adaptive lights 123 is advantageously arranged behind the stop bar and on the centreline of the traffic lane on which the stop bar is located, although a disposition parallel to and offset from the centreline can be contemplated. In addition, another row 168 of in-pavement lights 169 can be arranged at the distal end of row 167 and cross to the centreline 121. The lights of the second row 168 can be illuminated to emit the second colour light in unison with the lights of the first row 167 to provide an even clearer visual warning indication.

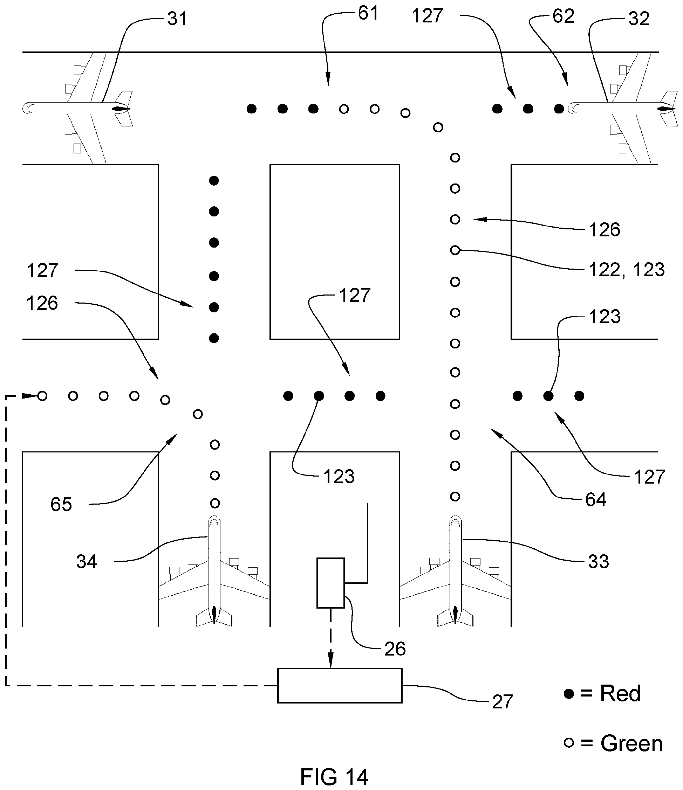

The various aspects of the present disclosure presented above are advantageously combined to cope with even more complex traffic scenarios avoiding an air traffic control operator having to issue instructions via voice communication. Referring to Fig. 14, the traffic control unit 27 can be configured to (automatically) control airfield traffic at multiple airfield intersections for multiple aircrafts via activating the adaptive lights 123 as described in the various examples above. In a first example, a holding position 62 for aircraft 32 at an intersection is indicated by a sequence 127 of red lit adaptive lights 123, possibly preceded by a sequence of green lit centreline lights (not shown). In addition, green centreline lights may be advantageously unlit (turned off) upfront the sequence 127. In a second example, a clearance instruction for aircraft 33 to cross intersection 64 and proceed to holding position 61 lining up behind aircraft 31 is visually indicated by a sequence 126 of lit green centreline lights along the route to reach holding position 61, followed by a sequence 127 of lit red adaptive lights 123 emitting red at the holding position. Sequence 126 can comprise monocolour centreline lights 122 along some segments of the route and adaptive lights 123 along other segments, or adaptive lights 123 along the entire route. Once aircraft 33 arrives at holding position 61, the lit green centreline lights along the taken route may be turned off, and new visual instructions may be provided for any other aircraft approaching along the (same) route. In a third example, a clearance instruction for aircraft 34 to turn left at intersection 65 is visually indicated by a sequence 126 of lit green centreline lights along the route crossing intersection 65. At intersections 64, 65, the closed or unauthorized lanes for aircrafts 33, 34 respectively are indicated by a sequence 127 of lit red adaptive lights 123 at the entrance of each lane. It will be appreciated that the first, second and third examples can occur simultaneously on the airfield and these examples are merely illustrative of the various scenarios described in the present disclosure.

It will be appreciated that unlit centreline lights are not represented in Fig. 14. Whereas Fig. 14 illustrates situations in which the "Follow the Greens" concept is integrated with the protocols according to the present disclosure, it is alternatively possible to implement same protocols in which the centreline lights can be all turned on green except in the segments in which the adaptive lights 123 are lit red.

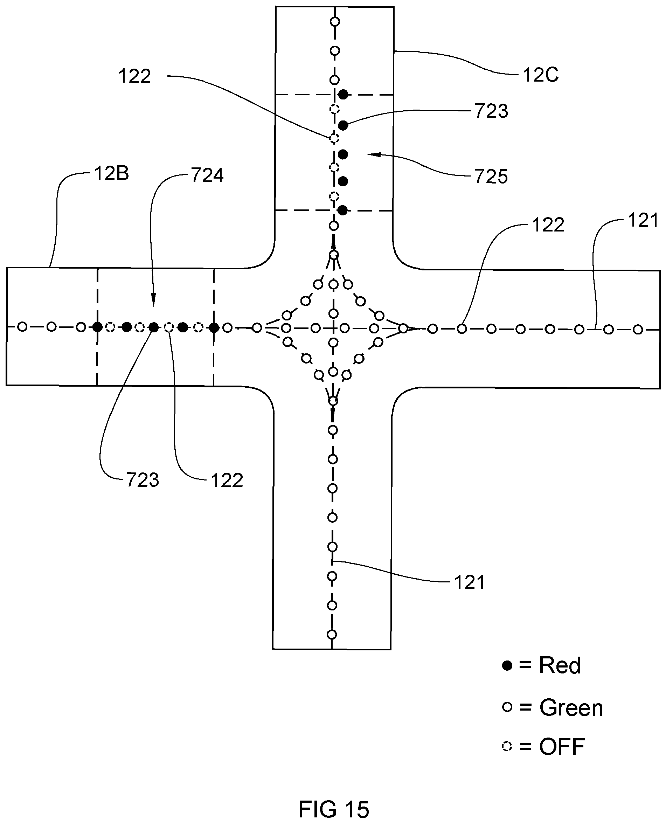

Referring to Fig. 15, in an alternative aspect of the present disclosure, it is contemplated to replace the adaptive lights 123 as utilized in any of the above aspects by dedicated in-pavement lights 723 configured to emit the second monocolour light (e.g., red) only, i.e., not enabled to additionally emit the first monocolour light (e.g., green). The dedicated in-pavement lights 723 can be installed along the airfield lane, specifically along the centreline of the airfield lane, such as the centreline 121 of taxiways 12B, 12C, in addition to the "usual" centreline lights 122 as provided for by ICAO Annex 14. In a first example, shown in segment 724, dedicated in-pavement lights 724 are installed interleaved with the centreline lights 122, on the centreline 121. In a second example, shown in segment 725, the dedicated in-pavement lights 723 are installed in one row, or in multiple rows, along the centreline 121 and offset from the centreline. They may be installed at longitudinal positions interleaved with the centreline lights 122 (illustrated in Fig. 15), or at longitudinal positions corresponding with the positions of centreline lights 122, or any other convenient way. In both examples, the centreline lights 122 in at least the respective segment 724, 725 are configured to be unlit when the dedicated in-pavement lights 723 are lit (i.e., emitting red), and vice versa. It will be appreciated that the dedicated in-pavement lights 723 can be utilized in replacement of the adaptive lights 123 in any one of the situations described above for the adaptive lights 123 and in otherwise the same manner. Specifically, when the adaptive lights 123 would be switched to emit red, the dedicated lights 723 would be activated (turn on) and when the adaptive lights 123 would be switched to emit green, the dedicated lights would be unlit and the centreline lights 122 along the respective segments would be activated (turn on). When the adaptive lights 123 would be unlit, both centreline lights 122 and dedicated lights 723 in the respective segment would be unlit.

It will be appreciated that in any of the various aspects of the present disclosure, the lengths of any one or both of the sequences 126, 127, i.e., how many of the centreline lights, respectively adaptive lights are lit, can be fixed or can be variable based on specific situations or traffic conditions.

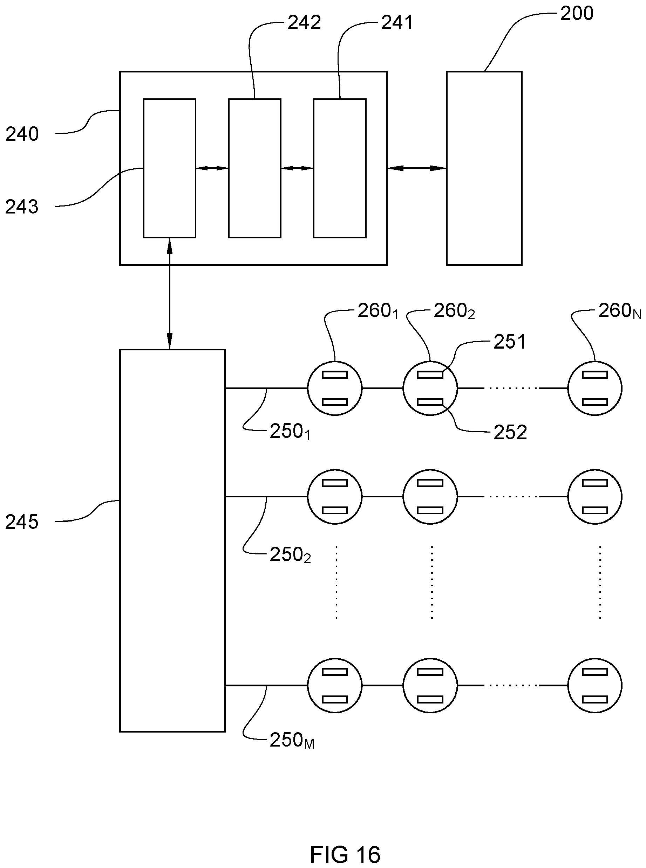

Referring to Fig. 16, a system for automated airport traffic control that includes one or more circuits of adaptive lights 123 can be configured to set the colour of the adaptive lights by adding a set-colour message to the communication interface with the AGL lights. Particularly, the system comprises a traffic control unit 240 operably connected to an AGL equipment interface module 245, which in turn is connected to one or more (M) AGL circuits 250₁, ... , 250nn. Each AGL circuit can comprise a plurality (N) of AGL (in-pavement) lights 260₁, ... , 260_{N} which can be adaptive lights 123, monocolourAGL lights 122, or a combination of both. The AGL lights 260₁, ... , 260_{N} can be unidirectional or bidirectional. To this end, the AGL lights can be addressable through an individual communication channel for each light direction 251, 252 respectively, where needed. The AGL equipment interface module 245 can comprise one or more constant current regulators (CCRs) to provide power to the AGL circuits 250₁, ... , 250m, as well as communication hardware configured to address the AGL lights with operating commands generated by the control unit 240. The AGL equipment interface module 245 can be configured to communicate with the AGL lights via wired communication, e.g. power line communication as known in the art, or dedicated wired communication cables such as optical fibre, or via wireless communication channels. It will be appreciated that the AGL lights 260₁, ... , 260_{N} of each AGL circuit 250₁, ... , 250_{M} can be operated or addressed individually by the AGL equipment interface module 245 and/or control unit 240, or in a block of multiple lights. The AGL circuits 250₁, ... , 250_{M} can be series circuits with AGL lights 260₁, ... , 260_{N} connected in series, parallel circuits, or a combination of both.

Traffic control unit 240 comprises a memory module 241, a processing module 242 and a communication module 243. The memory module 241 can store information relating to the AGL lights 260₁, ... , 260_{N} including but not limited to AGL circuit identifier, block identifier, position and attributes of each AGL light (e.g. unique ID, function, monodirectional, bidirectional, available colours). The processing module 242 is operably coupled to the memory module 241 and is configured to generate operation commands to operate the AGL lights 260₁, ... , 260_{N} in each AGL circuit 250₁, ... , 250_{M} and to transmit the commands to the communication module 243.

The processing module 242 can be configured to execute instructions to automatically determine an activation of each AGL light (e.g., setting the light colour and/or light intensity) based on a predetermined set of rules, such as rules corresponding to the applications set out in the present disclosure. To this end, the processing module 242 can be configured to receive surveillance data related to the movements in the airport, such as from ATC standard sensors or additional sensors in the airfield. Particularly, the processing module 242 can be operably coupled to the A-SMGCS system 20 for receiving the surveillance data. In addition, or alternatively, the processing module 242 can be operably coupled to a user interface 200 to manually activate lights with a pre-selected colour, e.g. by a control tower operator.

The communication module 243 is configured to communicate with the AGL equipment module 245 to provide instructions to activate the AGL lights and select colour. The communication module can additionally be configured to receive surveillance data from one or more airport surveillance systems and/or receive airport flight plan data which it forwards to the processing module 242. Surveillance data and/or airport flight plan data can be provided by an external A-SMGCS system 20 or directly by the surveillance systems. Based on the surveillance data and/or airport flight plan data, the processing module 242 can be configured to generate switching commands for operating the AGL lights, particularly to select colour of the AGL lights for one or more of the channels 251, 252.

A set-colour message is advantageously added to the communication protocols with the AGL lights, e.g. by the processing module 242. The set-colour message can be addressed to a block of multiple AGL lights or to an individual light. In the former case, the set-colour message can include a Block identifier and the AGL equipment interface module 245 is commanded to set all the lights of the given Block ID. In the latter case, the set-colour message can include an AGL light identifier and possibly a channel (direction) identifier and the AGL equipment interface module 245 is commanded to set the AGL light corresponding to the identifier and possibly channel (direction) to the given colour. It is possible to include a single command allowing to set all channels of an AGL light and/or all blocks of a specific AGL circuit to a given colour. The set-colour message can comprise a field within the message payload representing a light colour, where each available colour could be represented for example by a different number. It is alternatively possible to merge or integrate a set-colour command for the adaptive lights with other commands such as mode (ON/OFF) and intensity commands.

The AGL equipment interface module 245 is advantageously configured to communicate bidirectionally with the AGL lights 260₁, ... , 260_{N}. Particularly, the AGL lights can be configured to respond to receiving an operating command from the AGL equipment interface module 245 with an acknowledgment (ACK) message if the required operational conditions are met and the command can be executed, or otherwise with a not-acknowledgement (NACK) message when the command failed to be executed. The AGL equipment interface module 245 is advantageously configured collect all the ACK and NACK messages received from the AGL lights and transmit a status update message to the control unit 240.

It will be appreciated that the traffic control unit 240 can be part of the A-SMGCS system 20.

It will be appreciated that some or all of the examples presented above can be utilized under all visibility conditions, or only under low visibility conditions. They can be utilized only during night operations, or during day operations as well.

## Claims

1. System for automated airport traffic control, wherein the system comprises a traffic control unit (27, 165, 240) connected to a plurality of in-pavement lights (123) arranged along an airport traffic lane (12A-D), particularly a taxiway, a runway, an apron and/or a manoeuvring area of the airport,
wherein each of the plurality of in-pavement lights is configured to be switchable between alternately emitting a first monocolour light (1231) in a first direction and a second monocolour light (1232) in the first direction, preferably wherein the first monocolour light corresponds with a basic application colour of the plurality of in-pavement lights emitting in the first direction, preferably selected from the group consisting of green, yellow, orange, blue and white and wherein the second monocolour light is different from the first monocolour light, preferably red or yellow,
**characterised in that**:
the traffic control unit is configured to:
receive airport traffic surveillance data,
process the airport traffic surveillance data so as to determine a traffic conflict situation and traffic control instructions to avoid and/or resolve the traffic conflict situation, and
generate switching commands configured to switching a first sequence (127) of the in-pavement lights to emit the second monocolour light in the first direction so as to provide a visual instruction to an aircraft and/or airport vehicle based on the traffic control instructions, preferably wherein the first sequence of in-pavement lights is configured to emit steadily the second monocolour light.

2. System of claim 1, wherein the plurality of in-pavement lights comprise in-pavement lights arranged along a centreline of the airport traffic lane, particularly the plurality of in-pavement lights are centreline lights, lead-on lights, or lead-off lights.

3. System of any one of the preceding claims, wherein the traffic control unit is implemented with a decision logic configured to determine which lights of the plurality of in-pavement lights are assigned to the first sequence based on the airport traffic surveillance data and on the traffic control instructions.

4. System of any one of the preceding claims, wherein the traffic control unit is further configured to process the traffic surveillance data so as to determine that the traffic conflict situation is resolved and, following determination that the traffic control situation is resolved, to generate switching commands to switching the first sequence of the in-pavement lights to stop emitting the second monocolour light based on the traffic conflict situation being resolved.

5. System of any one of the preceding claims, wherein the traffic control unit is configured to determine the traffic conflict situation and/or to generate the switching commands based on one or a combination of: a wingspan of the aircraft, an undercarriage layout of the aircraft, an assigned trajectory of the aircraft and/or airport vehicle, a layout of the airport, a position of the aircraft and/or airport vehicle, a speed of the aircraft and/or airport vehicle, a direction of movement of the aircraft and/or airport vehicle, an oversteering, understeering and/or countersteering of the aircraft, an environmental condition.

6. System of any one of the preceding claims, wherein the visual instructions comprise a halt instruction.

7. System of any one of the preceding claims, wherein the traffic control unit is configured to provide a visual halt position for a push back truck during an aircraft push back operation by the first sequence.

8. System of any one of the preceding claims, wherein the traffic control instructions comprise a route indication instruction at a junction of two or more airport traffic lanes, wherein the first sequence is configured to indicate an airport traffic lane closed to the aircraft and/or airport vehicle at the junction, preferably wherein the traffic control unit is configured to generate switching commands to switching a second sequence (126) of the in-pavement lights to emit the first monocolour light in the first direction based on the route indication instruction.

9. System of the preceding claim, wherein the two or more traffic lines are de-icing lanes, wherein the traffic control unit is configured to generate switching commands to switching a second sequence of the in-pavement lights to emit the first monocolour light configured to indicate the de-icing lane allotted to the respective aircraft and/or airport vehicle.

10. System of claim 8, wherein the two or more traffic lines are parallel taxi lines on a same taxiway of the airfield, wherein the first sequence is configured to indicate closed ones of the two or more traffic lines, preferably the second sequence is configured to indicate the parallel taxi line allotted to the respective aircraft and/or airport vehicle.

11. System of any one of the preceding claims, wherein the traffic control instructions comprise visual clearance instructions to taxi-out from a park position of an aircraft and/or an airport vehicle and wherein the traffic control unit is configured to generate switching commands to switching the in-pavement lights of the first sequence to stop emitting the second monocolour light based on the visual clearance instructions, optionally to switch a second sequence of the in-pavement lights to emit the first monocolour light along an assigned route of the respective aircraft and/or airport vehicle.

12. System of any one of the preceding claims, wherein the traffic control unit is configured to segment a traffic lane provided with the in-pavement lights in multiple longitudinal blocks based on the traffic control instructions, wherein consecutive blocks are configured to be separated by the first sequence of the in-pavement lights emitting the second monocolour light, preferably wherein each of the multiple longitudinal blocks is configured to receive a single aircraft or airport vehicle, preferably wherein the traffic lane is a taxiway, a runway or a lane of a manoeuvring area of the airport.

13. System of any one of the preceding claims, wherein the traffic control unit is configured to predict the traffic conflict situation based on a detected speed and/or direction of movement of the aircraft and/or airport vehicle.

14. System of any one of the preceding claims, wherein the plurality of in-pavement lights are replaced by first in-pavement lights (122) configured to emit in the first monocolour light in the first direction and second in-pavement lights (723) configured to emit in the second monocolour light in the first direction, wherein the first in-pavement lights are arranged in a first row along the airport traffic lane (12), preferably along a centreline (121) of the airport traffic lane, and wherein the second in-pavement lights are arranged in at least one second row parallel to the first row.

15. System of the preceding claim, wherein the second in-pavement lights of the second row are interleaved with the first in-pavement lights of the first row, or wherein the second row is offset from and preferably parallel to, the first row.

16. Advanced Surface Movement and Guidance Control System (20), comprising the system of any one of the preceding claims.
